# EUROPEAN PATENT APPLICATION

(11) **EP 3 156 645 A1**
(43) Date of publication of application: **19.04.2017**
(21) Application number: 16153755.0
(22) Date of filing: 02.02.2016
(51) Int. Cl.: F03D 1/06

(54) **TURBINATOR**

(30) Priority: 16.10.2015 US 201514884858
(71) Applicant: Chan, Augustine, Campbell River, British Columbia V9W 5Z6 (CA)
(72) Inventor: Chan, Augustine, Campbell River, British Columbia V9W 5Z6 (CA)
(74) Representative: Romano, Giuseppe

(57) **Abstract**

The invention relates to a improved wind turbine that is used for converting wind energy into electrical energy. The shape of the wind turbine is like a set of concentric circular rings. It has minimum three rings for fixing the blades. It has several strong blades. Each blade is 6 inches long, and 4 inches wide. Each blade is separated by 1 foot from other. All of the blades are fixed at an optimal angle between 100 degrees and 130 degrees. It has a hub for attaching to the input shaft of the generator. It is based on the principle of a windmill for converting wind energy into rotational energy, rotational energy to mechanical energy, and mechanical to electrical energy.

## Description

### FIELD OF THE INVENTION

The present invention generally relates to equipment used in producing electricity from sources other than fossil fuels. The invention particularly relates to wind turbines that are used to convert wind energy into electrical energy.

### BACKGROUND OF THE INVENTION

Electrical power is presently produced through various techniques. The most common technique is the combustion of fossil fuels, such as coal and oil, to create steam, which turns turbines that drive electric generators or dynamos. The products of the combustion of fossil fuels, however, are pollutants. Such pollutants are now concentrated in the air of our major cities, and are diffusing throughout the air of our planet. Such pollutants include poisons, such as sulfates, nitrates, carbon oxides, etc. Electric power is also produced by atomic plants. Such plants, however, generate nuclear waste, which is inherently dangerous and, in addition, present a serious storage problem. This leaves hydroelectric, solar, geothermal, tidal, and wind as alternate energy sources, which are environmentally clean and not inherently dangerous.

One alternate energy source that is particularly promising is wind farms, which are presently in use but only on a limited basis. Known windmills are generally very large and expensive. Smaller, relatively inexpensive units of advanced, more efficient designs could provide more energy per land area, especially if utilized on a national or worldwide scale. Such units could be utilized individually, or connected to existing utility power grids, whether atomic or fossil.

Various techniques are employed commercially, or are disclosed in the patent literature, for converting wind energy to electrical energy. All of the prior patents convert wind energy to electrical energy by a single propeller that utilizes blades that rotate in a plane around a horizontal axis. All are of marginal efficiency because they utilize a dynamo or generator with a fixed power take off member and a rotatable rotor for converting wind power to direct current electrical power.

A prior art, US 4345161 A, discloses an elongated, generally cylindrical housing that is provided with oppositely pitched multi-bladed rotors at the fore and aft ends thereof. These are directly coupled, respectively, to the internal and external rotors of an electric generator. The device is pivotally mounted atop a mast in an off center relation to the fore and aft rotors. The pivot is positioned substantially closer to the front rotor. Electrical wiring conducts the energy that is produced by the generator to storage batteries, which are connected to an inverter to produce an AC output. Appropriate ampere, DC and AC voltage gauges, as well as a shut-off switch are included in the electrical system.

Another prior art, US 4449053 A, provides a vertical axis wind turbine that has a hollow rotor tube that extends upwardly from a support structure with two or three rotor blades. These rotor blades are set in a troposkein configuration on the rotor tube and a generator, which is driven by the rotor tube to produce electrical power. The rotor blades are preferably extruded from an aluminum alloy, and are connected to the rotor tube by connectors that are secured on the leading and trailing edges of each blade at opposite ends thereof, and by mini-strut members, which attach the connectors to the rotor tube. The rotor tube is secured to the support structure in a lower bearing connection, and is secured to a guy wire connection at the top of the turbine through an upper bearing connection. The turbine includes an erection hinge between the support structure and the rotor so that the rotor can be assembled at close to ground level and thereafter be hinged to the vertical position. The upper bearing includes an automatic system for lubricating the bearing after the rotor has been hinged to the vertical position. A system is also provided for visually tensioning the guy cables, which support the turbine rotor.

Another prior art, US 4447738 A, relates to wind power electrical generator systems, and, in particular, to a wind power electrical generator system in which the wind power is first converted to a pressurized source of air, which is subsequently converted to electrical power by an air motor connected to an electrical generator.

As illustrated by the great number of prior patents, as well as commercial devices and techniques, efforts are continuously being made in an attempt to improve devices for converting wind energy into electrical energy. Such efforts are being made to render such devices more efficient, reliable, inexpensive, and convenient to use. None of these previous efforts, however, provide the benefits attendant with the present invention. Additionally, the prior patents, commercial devices, and techniques do not suggest the present inventive combination of component elements arranged and configured, as disclosed and claimed herein.

Therefore, the present invention provides a turbinator that can convert wind energy into rotational energy used to generate electricity. The turbinator is also portable and detachable. It is circular in shape, and has hundreds of small blades in it, which are stronger and more powerful.

### SUMMARY OF THE INVENTION

In the view of the foregoing disadvantages inherent in the known types of wind turbines now present in the prior art, the present invention provides an improved wind turbine. As such, the general purpose of the present invention, which will be described subsequently in greater detail, is to provide a new and improved wind turbine, which has all the advantages of the prior art, and none of the disadvantages.

The primary objective of the present invention is to provide a unique wind turbine for converting wind energy into electrical energy.

Another objective of the present invention is to provide a wind energy conversion device that is self-sufficient, extremely efficient, and durable.

It is, therefore, an objective of the present invention to provide a wind turbine that has several blades.

It is a further objective of the present invention to provide a wind turbine that is lightweight and whose blades are made of aluminium.

It is, therefore, an objective of the present invention to provide a wind turbine that is portable and detachable.

Another objective of the present invention is to provide a turbine that is economical to manufacture and easy to implement.

In this respect, before explaining at least one embodiment of the invention in detail, it is to be understood that the invention is not limited in its application to the details of construction and to the arrangements of the components set forth in the following description or illustrated in the drawings. The invention is capable of other embodiments, and of being practiced and carried out in various ways. Also, it is to be understood that the phraseology and terminology employed herein are for the purpose of description, and should not be regarded as limiting.

These, together with other objectives of the invention and the various features of novelty that characterize the invention, are pointed out with particularity in the disclosure. For a better understanding of the invention, its operating advantages, and the specific objectives attained by its uses, reference should be made to the accompanying descriptive matter, in which there are illustrated preferred embodiments of the invention.

Accordingly, the present disclosure includes features and advantages that are believed to enable it to advance the art of placing items on carriers. Characteristics and advantages of the present disclosure, described above, and additional features and benefits will be readily apparent to those skilled in the art upon consideration of the following detailed description and reference to the accompanying drawings.

### BRIEF DESCRIPTION OF THE FIGURES

The invention will be better understood, and objectives other than those set forth above will become apparent, when consideration is given to the following detailed description thereof. Such description makes reference to the annexed drawings, wherein:

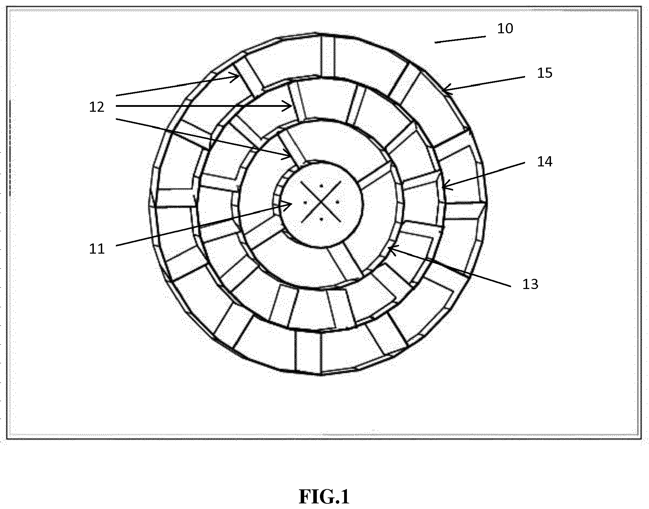

FIG. 1 shows the front view of the present invention.

### DETAILED DESCRIPTION OF THE INVENTION

In the following detailed description, many embodiments are described, as per the invention. These embodiments are described in sufficient detail to enable those skilled in the art to practice the invention, and it is to be understood that the embodiments may be combined, or that other embodiments may be utilized, and that structural, logical, and electrical changes may be made without departing from the spirit and scope of the present invention. The following detailed description is, therefore, not to be taken in a limiting sense, and the scope of the present invention is defined by the appended description and their equivalents.

Refering Fig. 1 shows preferred embodiment of present invention. The wind turbine 10 of the present invention comprises a hub 11, blades 12 and rings 13,14 and 15. The Hub is welded to a plate that is attached to the input shaft of a generator. The hub is attached to a first ring via welded blades. The inner most ring 13 has four or 4 blades that are welded to it. The blades are also welded to hub 11. There are a twelve or 12 blades that are welded to the outer surface of the first ring and a inner surface of a second ring 14. The outer surface of the second ring is attached to a third ring 15 via welded blades. There are twelve or 12 no. of blades which are welded to outer surface of the second ring and an inner surface of the outmost ring 15. The blades are made of aluminium, which is lighter in weight.

The turbine 10 is bolted to a plate attached to the input shaft. Removing the coupling bolts make the turbine portable. The rotational speed of the wind turbine can reach upto 12 kpm at peak.

The current invention works in a similar way as conventional horizontal blade wind turbine. The wind turbine of present invention uses the same mechanism as a windmill or wind turbine for converting wind energy into rotational energy, which is used to generate electricity. The present invention has a central hub with multiple circular rings embodied with multiple blades positioned at an optimal angle. The number of rings can vary from three to the desired number needed for generating the electricity and the distance between the consecutive blades also can vary. The distance between any two consecutive blades is a foot or 2 feet depending upon the width of blades and the rings being used for different size of wind mill.

In the examplary embodiment of wind turbine, the diameter of the turbinator can be for example four or 4 feet. The invention has several strong blades. Each blade is 6 inches long and 4 inches wide. The dimensions of the blade could vary from 2ft. to 16ft. in length. The blades are positioned at an optimal angle between 100 degree and 130 degrees. The difference betwwen will however vary, depending upon the length of blades used as long as this difference does not has shadowing effect on the ground. It is a portable and detachable turbinator. The turbinator also has a hub for attaching to the shaft of the generator.

The present invention is directed at an improved wind turbine having a horizontal axis of rotation. In the preferred embodiment of the present invention, the wind speed is required to be for example 13 mph or 6 m/s to generate electricity. The tips of the blades are attached to a ring. The rings hold the blades in place and provide support to the hub. The hub provides a location for energy transfer either by mechanical means or electrical means, and provides at least one location for means for reducing friction. The hub may further include a device for controlling the direction of the rotor axis based upon the wind direction such as a rudder.

When the wind reaches a minimum required speed, it starts to push the blades that are fall in its path. Due to this force exerted by wind on the blades the rings are rotated. As the hub is attached to inner most ring the rotational movement of rings is transferred to the hub. The hub rotates the input shaft of the generator as it is welded to it. The rotational energy gets converted into mechanical energy by the generator. The mechanical energy is gets coverted to electricity. This electricity is transferred to a rectifier. The rectifier in turn transfers it to transformer. At the end the transformer transfers the electricity to the power grid, from where it is provided to many households.

It is to be understood that the above description is intended to be illustrative, and not restrictive. For example, the above-discussed embodiments may be used in combination with each other. Many other embodiments will be apparent to those of skill in the art upon reviewing the above description.

The benefits and advantages which may be provided by the present invention have been described above with regard to specific embodiments. These benefits and advantages, and any elements or limitations that may cause them to occur or to become more pronounced, are not to be construed as critical, required, or essential features of any or all of the embodiments.

While the present invention has been described with reference to particular embodiments, it should be understood that the embodiments are illustrative, and that the scope of the invention is not limited to these embodiments. Many variations, modifications, additions, and improvements to the embodiments described above are possible. It is contemplated that these variations, modifications, additions, and improvements fall within the scope of the invention.

## Claims

1. A wind turbine for generating electricity, comprising:
a plurality of blades;
a hub; and
a plurality of rings.

2. The wind turbine of claim 1, wherein said plurality of rings comprises a first ring, a second ring and a third ring.

3. The wind turbine of claim 1, wherein each of said plurality of blades has a first end and a second end.

4. The wind turbine of claim 3, wherein said first end of said plurality of blades is welded to said hub.

5. The wind turbine of claim 3, wherein said second end of said plurality of blades is said first ring.

6. The wind turbine of claim 1, wherein said first end of plurality of blades is welded to an outer surface of said first ring.

7. The wind turbine of claim 1, wherein said second end of plurality of blades is welded to an inner surface of said second ring.

8. The wind turbine of claim 1, wherein said first end of plurality of blades is welded to an outer surface of said second ring.

9. The wind turbine of claim 1, wherein said second end of plurality of blades is welded to an inner surface of said third ring.

10. The wind turbine claim 1, wherein said hub is connected a input shaft of a generator.

11. The wind turbine claim 1, wherein the distance between each of plurality of blades varies to avoid shadowing effect.

12. The wind turbine claim 1, wherein said plurality of blades are made of aluminium.
